# EUROPÄISCHE PATENTSCHRIFT

(11) **EP 0 508 050 B1**
(45) Veröffentlichungstag und Bekanntmachung des Hinweises auf die Patenterteilung: **18.10.1995**
(21) Anmeldenummer: 92101731.5
(22) Anmeldetag: 03.02.1992
(51) Int. Cl.: F16L 33/04, F16L 3/10, F16L 3/137

(54) **Gelenkband-Konsolenschelle**
Support clamp having a hinge
Collier du support avec charniere

(30) Priorität: 09.04.1991 DE 4111359; 02.09.1991 DE 9110844 U
(43) Veröffentlichungstag der Anmeldung: 14.10.1992
(73) Patentinhaber: HYDAC FILTERTECHNIK GmbH, D-66273 Sulzbach (DE)
(72) Erfinder: Kasubke, Volker, W-6680 Neunkirchen (DE)
(74) Vertreter: Patentanwälte Bartels und Partner

(56) Entgegenhaltungen:
- DE-C- 1 108 019
- DE-U- 1 947 749
- FR-A- 674 127
- US-A- 3 632 069

## Beschreibung

Die Erfindung betrifft eine Schelle mit den Merkmalen des Oberbegriffs des Anspruches 1.

Eine gattungsfremde Schelle ist durch die FR-A-674 127 bekannt. Bei dieser bekannten Schelle ist das biegsame, zweistückige Halteband aus zwei gleichen Schellenhälften gebildet, die an ihrem dem Verschlußteil jeweils abgekehrten Ende unter Bildung einer Hinterschneidung umgebogen sind, die dazu dient, in eine Ausnehmung eines Halteteiles, die aus einem Ausschnitt in einer ebenen Platte, einem Winkelstück oder eines Rohres gebildet ist, einzugreifen. Das Halteband nimmt gegenüber dem Halteteil erst dann eine definierte, die Montagearbeit erleichternde Lage ein, wenn das von dem Halteband aufzunehmende Teil in Form eines Rohres von dem Halteband umschlungen ist. Ferner lassen sich mit dem Verschlußteil keine allzu großen Kräfte auf das aufzunehmende Teil ausüben, um dieses mittels dem Halteband festzulegen, da ansonsten die Gefahr besteht, daß an der Stelle der Hinterschneidung das Halteband nachgibt und demgemäß die herzustellende feste Verbindung zwischen Halteband und Halteteil versagt. Im übrigen ist die bekannte Lösung aufwendig in der Herstellung.

Es sind ferner gattungsfremde Schellen auf dem Markt frei erhältlich, die jeweils mindestens ein biegsames Halteband aufweisen, an dem mindestens ein Verschlußteil angeordnet ist, und die ferner über ein Halteteil verfügen. Mittels dieser Schellen lassen sich die verschiedensten Teile aufnehmen, insbesondere aber Rohre mit großen Durchmessern oder bestimmte Arten von Druckspeichern. Bei dieser bekannten Art von Schellen ist das jeweilige Halteteil mittels einer Schweißung mit dem an sich biegsamen Halteband fest verbunden und es entsteht ein starrer Aufbau der bekannten Schelle. Die aufzunehmenden Teile sind daher stirnseitig in die Schelle einzuführen und werden mittels dem Verschlußteil der Schelle in derselben festgelegt. Sofern ein aus Platzgründen stirnseitiges Einschieben nicht möglich ist, hat man auch dahingehende Schellen mit einem lösbaren Halteband versehen, das nach Einlegen des jeweils aufzunehmenden Teiles mittels zwei an seinen Enden vorgesehenen Verschlußteilen mit einem anderen Halteband verbindbar ist, an dem das Halteteil angeschweißt ist. Bei diesen beiden gattungsfremden Schellentypen lassen sich nur Teile mit einem vorgegebenen Durchmesser aufnehmen, an den die Schellen ihrer Baugröße nach angepaßt sind.

Bei einer weiteren gattungsfremden Schelle nach der Fig.5 der DE-U-1 947 749 ist eine Schelle mit einem biegsamen Halteband bekannt, an dem ein Verschlußteil angeordnet ist, mit einem Halteteil und mit Haltemitteln zum Festlegen des Haltebandes am Halteteil. Das Band gemäß dieser Ausführung ist zweistückig ausgebildet, wobei jedes freie Ende des Bandes einen Knebel aufweist, der in eine Öffnung des Halteteiles eingreift. Die als Haltemittel dienenden Knebel sind größer als die Ausnehmungen ausgebildet, die zum seitlichen Einführen der beiden Haltebandteile mit ihren Knebeln nach einer gemeinsamen Seite des Halteteiles ins Freie münden. Bei der bekannten Schelle ist ein Abreißen der Knebel, insbesondere beim Aufbringen großer Haltekräfte, nicht auszuschließen und zumindest bei der Montage ist ein Lösen des jeweiligen Haltebandteiles mit Knebel aus der zugeordneten Ausnehmung möglich mit der Folge, daß eine sichere Verbindung zwischen dem jeweiligen Bandstück und dem Halteteil nicht gewährleistet werden kann.

Durch die DE-C-1 108 019 und die Fig.4 der DE-U-1 947 749 sind gattungsgleiche Schellen mit einem biegsamen und einstückigen Halteband bekannt, bei denen das jeweilige Halteteil zwei von den Wänden des Halteteiles umschlossene tunnelförmige Ausnehmungen aufweist, in die das Halteband in Längsrichtung eingeführt und zum Umschließen eines rohrförmigen Körpers verschoben wird. Aufgrund des einstückigen Haltebandes und der in sich geschlossenen Ausnehmungen im Halteteil lassen sich zwar große Haltekräfte auf das jeweils aufzunehmende Teil ausüben und dieses sicher am Halteteil festlegen; jedoch ist die Montage durch das in der Längsrichtung der tunnelförmigen Ausnehmung einzuführende Halteband erschwert, was insgesamt die Montagefreundlichkeit dieser Lösung herabsetzt.

Ausgehend von diesem Stand der Technik liegt der Erfindung die Aufgabe zugrunde, eine Schelle zu schaffen, mittels deren große Haltekräfte auf das jeweils aufzunehmende Teil ausübbar sind, ohne daß es hierbei zu einem Materialversagen kommt, die montagefreundlich ist und mittels deren sich Teile mit einem großen Bereich an unterschiedlichen Weiten sicher aufnehmen und festlegen lassen.

Diese Aufgabe wird von einer Schelle mit den Merkmalen des Anspruches 1 gelöst. Dadurch, daß bei der erfindungsgemäßen Schelle gemäß dem kennzeichnenden Teil des Anspruches 1 die beiden Ausnehmungen nach einer gemeinsamen Seite des Halteteiles ins Freie münden und jeweils eine Hinterschneidung aufweisen, wobei endseitig an der jeweiligen Ausnehmung als Haltemittel eine Nase vorgesehen ist, ist in jedem Montagezustand von Halteband mit Halteteil eine sichere Verbindung zwischen diesen gewährleistet. Da ferner nach Einsetzen des Haltebandes in die beiden Ausnehmungen des Halteteiles das Halteband von Anfang an eine definierte Lage einnimmt, ist, insbesondere für das spätere Festlegen des aufzunehmenden Teiles meist in Form eines Rohres, die Montagefreundlichkeit insgesamt erhöht. Obwohl die Ausnehmungen in sich nicht geschlossen sind, sondern ins Freie münden, hält das jeweilige Haltemittel in Form einer Nase, die endseitig an der jeweiligen Ausnehmung vorgesehen ist, das einstückige Halteband sicher in den Ausnehmungen, mit dem sich dann mittels des Verschlußteiles große Haltekräfte auf das aufzunehmende Teil ausüben lassen, ohne daß es zu einem Versagen kommt.

Das Halteband steht mit dem Halteteil derart in Verbindung, daß sich die freien Enden des Haltebandes weit auseinander für die Aufnahme des Teiles und wieder zusammen für das Festlegen dieses aufzunehmenden Teiles der Schelle biegen lassen. Hierdurch lassen sich aber auch Teile mit weit voneinander abweichenden, innerhalb eines Größenbereiches liegenden Weiten noch sicher festlegen. Soll ein ganz anderer Größenbereich an Weiten abgedeckt werden, kann das hierfür vorgesehene Halteband ohne weiteres gegen das bisher mit dem Halteteil verbundene ausgetauscht werden. Ein stirnseitiges Einschieben der aufzunehmenden Teile in die Schelle ist nicht mehr notwendig. Ferner läßt sich die erfindungsgemäße Schelle mit einfachen technischen Mitteln und damit kostengünstig herstellen.

Wird das Halteband einmal nicht benötigt, weil kein Teil aufzunehmen ist, kann das Halteteil an seiner Stelle, beispielsweise an einer Gehäusewandung oder an einer Gebäudewand, verbleiben und ist dann mit dem jeweiligen Halteband im Bedarfsfall nachrüstbar.

Durch die mögliche Trennung von Halteteil und Halteband läßt sich das Halteteil zunächst montieren und dann mit dem Halteband nachträglich versehen. Auch läßt sich die erfindungsgemäße Schelle an schwer zugänglichen Stellen mit den üblichen Befestigungsmitteln, wie Schrauben, ohne Schwierigkeiten anbringen.

Durch die größere Flexibilität des Haltebandes bei der erfindungsgemäßen Lösung lassen sich mit der erfindungsgemäßen Schelle neben zylindrischen Körpern auch nicht-zylindrische, beispielsweise ovale Körper mit vorgebbarer Weite festspannen und damit festlegen.

Bei einer bevorzugten Ausführungsform der erfindungsgemäßen Schelle ist ein Teil der Haltemittel Teil mindestens eines Verbindungsteiles, das jeweils in das Halteteil einsetzbar ist und mittels dem das Halteband mit dem Halteteil fest verbindbar ist. Neben der hierdurch entstehenden sicheren Klemmverbindung ist eine unmittelbare Auflage des aufzunehmenden Teiles auf dem Halteteil vermeidbar, so daß Materialschädigungen durch Korrosion in diesem Bereich nicht auftreten.

Vorzugsweise weist das Verbindungsteil der erfindungsgemäßen Schelle eine Auflagefläche für das von der Schelle aufzunehmende Teil auf. Die Auflagefläche für das aufzunehmende Teil läßt sich der Querschnittsform nach den Gegebenheiten in der Praxis anpassen. So kann die Auflagefläche ballig ausgebildet sein, was als Zentrierhilfe eine nahezu linienförmige Auflage des aufzunehmenden und zu spannenden Teiles ergibt, die nach dem Spannen mittels dem Verschlußteil durch den damit einhergehenden Anpreßdruck in einen flächenförmigen Anlagebereich übergeht, was sich günstig auf die Kraftverteilung auswirkt.

Bei einer bevorzugten Ausführungsform der erfindungsgemäßen Schelle weist das Halteteil zwischen seinen beiden Ausnehmungen ein Stützteil mit einer Krümmung auf, die kleiner oder gleich der Krümmung des Haltebandes in dem Bereich zwischen diesen Ausnehmungen ist. Je kleiner hierbei die Krümmung des Haltebandes ist, umso größer läßt sich der jeweilige Kreisdurchmesser der Schelle gestalten, wobei im umgekehrten Falle die Krümmung des Haltebandes derart groß gewählt werden kann, daß auch aufzunehmende Teile ellyptischer Querschnittsform sicher festlegbar sind.

Bei einer weiteren bevorzugten Ausführungsform der erfindungsgemäßen Schelle ist das Halteteil zumindest teilweise breiter als das Halteband und das Stützteil ist mit einem Fußteil verbunden, mittels dessen die Schelle befestigbar ist. Hierdurch können die Befestigungsmittel, wie beispielsweise Schrauben, zum Befestigen des Halteteiles und damit der Schelle an einem anderen Teil, beispielsweise an einer Gehäusewand, das Halteteil in einem Bereich durchgreifen, der von dem Halteband freigelassen ist. Ein Verkanten der Verbindungsmittel bei deren Einsetzen ist vermieden und eine noch leichtere Zugänglichkeit für die Montagewerkzeuge erreicht.

Bei einer weiteren besonders bevorzugten Ausführungsform der erfindungsgemäßen Schelle weist das Verschlußteil zwei Zapfen auf, die jeweils von den Enden des Haltebandes umschlungen sind, von denen einer schwenkbar angeordnet ist und ein längsverstellbares Eingreifteil aufweist, das in eine Ausnehmung des anderen Zapfens einsetzbar ist. Hierdurch ist eine Art Schnellverschluß erreicht, dessen Teile unverlierbar mit dem Halteband verbunden sind. Das längsverstellbare Eingreifteil unterstützt wiederum den Einsatz der erfindungsgemäßen Schelle für aufzunehmende Teile in einem größeren, vorgegebenen Durchmesser- bzw. Weitenbereich. Durch das Umschlingen der Zapfen des Verschlußteiles mittels den Enden des Haltebandes ist ein sicherer Halt derselben gewährleistet und große Haltekräfte können mit dem Verschlußteil bei der erfindungsgemäßen Schelle auf das aufzunehmende Teil ausgeübt werden, ohne daß es zu einem Versagen an der Stelle der Zapfen kommt.

Vorzugsweise ist vorgesehen, daß bei der erfindungsgemäßen Schelle das Halteband mindestens ein aufsteckbares Profilgummistück aufweist. Besonders bei aufzunehmenden Teilen, die aus einem weichen Werkstoff bestehen, bildet dieses Profilgummistück einen Schutz gegen Verschleiß. Ferner lassen sich über das Profilgummistück Schwingungen, die bei den aufzunehmenden Teilen auftreten können, dämpfen.

Vorzugsweise ist bei der erfindungsgemäßen Schelle das Halteband aus Nirosta-Stahl, das Halteteil aus einem Stahlblech und das Verbindungsteil aus Polyäthylen gebildet.

Im folgenden wird die erfindungsgemäße Schelle anhand der Zeichnung näher erläutert.

Es zeigen:
- Fig.1: eine Stirnansicht auf die erfindungsgemäße Schelle;
- Fig.2: in perspektivischer Darstellung einen Teil des Haltebandes ohne Profilgummistücke mit Verschlußteil;
- Fig.3 und 4: eine Draufsicht auf das Halteteil bzw. einen Schnitt nach der Linie I - I in Fig.3 mit abgeändertem Halteband 10a;
- Fig.5 und 6: eine Seitenansicht des Verbindungsteiles bzw. einen Schnitt längs der Linie II - II in Fig.5.

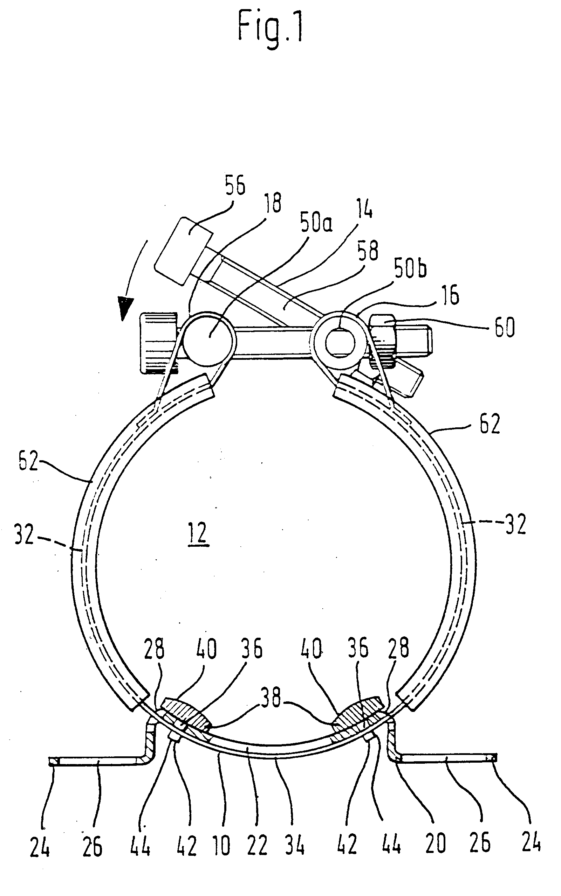

Die in Fig.1 dargestellte erfindungsgemäße Schelle weist ein biegsames Halteband 10 auf, das einstöckig und aus Nirosta-Stahl gebildet ist. Die Breite des Haltebandes 10 ist vorgebbar und abhängig von dem jeweils aufzunehmenden Teil (nicht dargestellt). Bei dem in Fig.1 dargestellten Ausführungsbeispiel begrenzt das Halteband 10 kreisförmig den Aufnahmeraum 12 für das aufzunehmende Teil, beispielsweise in Form eines zylindrischen Rohres oder eines Druckspeichers. An der Oberseite der Schelle ist ein als Ganzes mit 14 bezeichnetes Verschlußteil angeordnet, das es erlaubt, die beiden Enden 16 und 18 des Haltebandes 10 zum Festklemmen des aufzunehmenden Teiles (nicht dargestellt) in der Schelle aufeinander zu zubewegen.

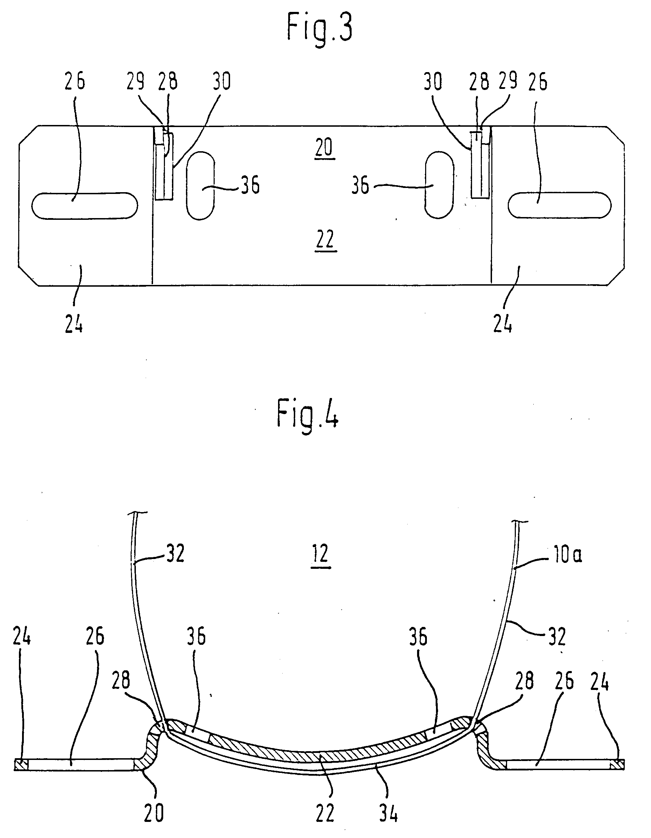

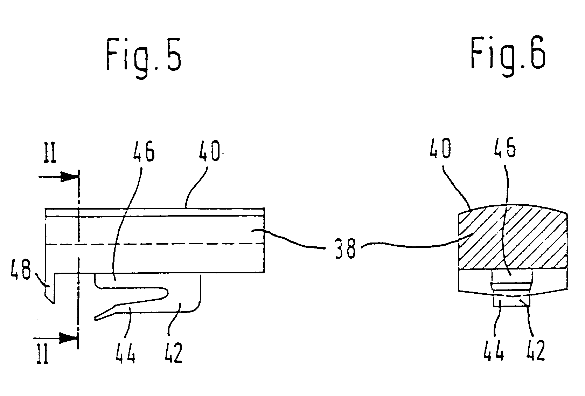

An der Unterseite der Schelle ist ein Halteteil 20 aus Stahlblech vorgesehen, das in den Fig.3 und 4 im einzelnen dargestellt ist, wobei Fig.4 eine zweite Ausführungsform eines mit 10a bezeichneten Haltebandes zeigt, das noch näher erläutert werden wird. Das Halteteil 20 ist im wesentlichen platten- oder konsolenartig ausgebildet und weist mittig ein Stützteil 22 auf, an das sich endseitig als Fußteil ausgebildet zwei flache Winkel 24 anschließen.

Jeder Winkel 24 weist ein Langloch 26 auf, das jeweils von einem Verbindungsmittel (nicht dargestellt), wie beispielsweise einer Schraube, durchgreifbar ist und zum Festlegen des Halteteiles 20 an einer Gehäuse- oder an einer Gebäudewand dient. Im gewölbten Übergangsbereich zwischen den beiden Winkeln 24 und dem Stützteil 22 ist jeweils eine Ausnehmung 28 vorgesehen, die das Aufnahmeteil für das Halteband 10,10a bildet, das in die Ausnehmungen 28 einsetzbar ist. Eine jede Ausnehmung 28 durchgreift das Halteteil 20 vollständig und weise eine Länge auf, die etwas geringer ist als die Hälfte der Breite des Halteteiles 20. Die Breite einer jeden Ausnehmung 28 ist der verwendeten Materialstärke für das Halteband 10,10a angepaßt. Beide Ausnehmungen 28 münden nach einer gemeinsamen Seite des Halteteteiles 20 hin ins Freie und verfügen jeweils über eine Hinterschneidung 30, die den Austritt des Haltebandes 10,10a aus den beiden Ausnehmungen 28 erschwert.

Bei der in Fig.1 dargestellten Ausführungsform mit dem Halteband 10 für die Aufnahme von Teilen mit kreisrundem Querschnitt weist das Stützteil 22, das zwischen den beiden Ausnehmungen 28 angeordnet ist, eine Krümmung auf, die gleich der Krümmung des Haltebandes 10 in dem Bereich zwischen diesen beiden Ausnehmungen 28 ist. Das Stützteil 22 ist also im Bereich zwischen den beiden Ausnehmungen 28 unmittelbar in Anlage mit dem Halteband 10 und bildet eine Art Widerlager aus, sobald ein aufzunehmendes Teil in der Schelle festgespannt ist.

Bei dem in Fig.4 teilweise dargestellten Halteband 10a weist dieses eine Krümmung auf, die größer ist als die Krümmung des Stützteiles 22 im Bereich zwischen den beiden Ausnehmungen 28. Hierbei ist das Halteband 10a im Bereich der beiden Ausnehmungen 28 in Fig.4 gesehen unterhalb des Stützteiles 22 abgeknickt, so daß die beiden Schenkel 32 des Haltebandes 10a einen anderen Krümmungsverlauf aufweisen als das Teil 34 des Haltebandes 10a, das zwischen diesen Knickstellen angeordnet ist. Durch diese Ausbildung des Haltebandes 10a läßt sich ein größerer Bereich an Weiten abdecken als dies bei dem Halteband 10 in Fig.1 der Fall ist, wobei das Halteband 10a auch besonders für das Einspannen im Querschnitt elliptischer Teile geeignet ist. Ferner wird durch die Ausbildung des Haltebandes 10a bei nicht festgespanntem Aufnahmeteil das Band von dem elastischen Klemmteil 42 des Verbindungsteiles 38 gegen die Hinterschneidung 30 gedrückt und somit der Austritt des Bandes 10a aus der jeweiligen Ausnehmung 28 erschwert. Bei festgespannten Aufnahmeteil paßt sich dann das Halteband 10a zwischen den beiden Ausnehmungen 28 der Krümmung des Stützteiles 22 an und weist anschließend diese im wesentlichen auf.

Quer zur Längsrichtung der beiden Langlöcher 26 sind im konvex gebildeten Stützteil 22 zwei weitere Langlöcher 36 vorgesehen, die den beiden Ausnehmungen 28 benachbart gegenüberliegen, die über die Längsmitte des Halteteiles 20 hinausragen und die dieses durchgreifen. Die beiden letztgenannten Langlöcher 36 sind jeweils für die Aufnahme eines Verbindungsteiles 38 vorgesehen, das in den Fig.5 und 6 im einzelnen dargestellt ist. Das Verbindungsteil 38 weist eine Auflagefläche 40 auf, die, wie insbesondere die Fig.6 zeigt, ballig ausgebildet und für die Anlage mit dem aufzunehmenden Teil (nicht dargestellt) vorgesehen ist. Auf der der Auflagefläche 40 gegenüberliegenden Seite des Verbindungsteiles 38 ist ein Klemmteil 42 vorgesehen, das eine Art Gabel ausbildet und eine Aufnahmezunge 44 aufweist, die elastisch nachgiebig ist. Die Öffnung des Klemmteiles 42 einschließlich der Aufnahmezunge 44 weist in dieselbe Richtung wie die nach außen gewandte Öffnung der beiden Ausnehmungen 28. Das mit der Aufnahmezunge 44 verbundene Plattenstück 46 des Klemmteiles 42 ist paßgenau mit den Langlöchern 36 und greift jeweils in diese derart ein, daß die Aufnahmezunge 44 auf der Unterseite des Stützteiles 22 herausragt (siehe Fig.1) und daß die jeweilige Auflagefläche 40 in den Aufnahmeraum 12 der Schelle hineinragt. Damit sich das zwischen Plattenstück 46 und Aufnahmezunge 44 eingerastete oder eingeklemmte Halteband 10 oder 10a nicht von dem Klemmteil 42 wieder ohne weiteres lösen kann, ist endseitig an den Ausnehmungen 28 eine Nase 29 vorgesehen, die das jeweils zum Einsatz kommende Halteband seitlich in Anlage mit dem Klemmteil 42 hält. Das Nasenstück 48 an dem Verbindungsteil 38 dient der Montagesicherung. Das aus Polyäthylen bestehende Verbindungsteil 38 kann in seinen Abmessungen dem jeweils verwendeten Halteband angepaßt sein.

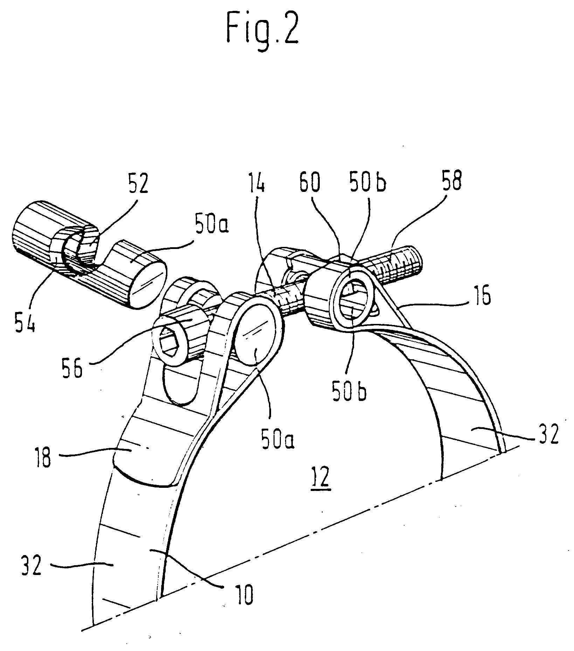

Das bereits angesprochene Verschlußteil 14 weist zwei Zapfen 50a,b auf (siehe Fig.2), die jeweils von den Enden 16,18 des Haltebandes 10,10a umschlungen sind, wobei diese Enden über eine Punktschweißverbindung (nicht dargestellt) mit der Oberseite des Haltebandes 10,10a verbunden sind. Der in Blickrichtung auf Fig.2 gesehen linke Zapfen 50a ist in dieser Figur der besseren Darstellung wegen außerhalb seines in der Schelle vorgesehenen Einbauzustandes nochmals dargestellt. Dieser Zapfen 50a weist eine Ausnehmung in Form einer Nut 52 auf, die, wie dies insbesondere die Fig.2 zeigt, auf der dem Betrachter zugewandtan Seite eine im Querschnitt kreisförmige Aussparung 54 aufweist, die eine Anlagefläche für den Kopf 56 einer als längsverstellbares Eingreifteil dienenden Innensechskantschraube 58 bildet. Die Innensechskantschraube 58 durchgreift ferner den Zapfen 50b, der drehbar innerhalb des an dieser Stelle umgeschlagenen Haltebandes 10, 10a gelagert ist. Mittels dieses drehbar gelagerten Zapfens 50b läßt sich die Schraube 58 aus ihrer in Fig.1 oben dargestellten Freigabestellung in Pfeilrichtung in ihre Verriegelungsstellung verschwenken, bei der die Schraube 58 in die Ausnehmung 52 eingreift.

Durch die Eigenspannung des elastisch federnden Haltebandes 10,10a bewegen sich die beiden Enden 16 und 18 voneinander weg, so daß der Kopf in die Aussparung 54 einrastet. Mittels der auf dem freien Gewindeende der Schraube 58 sitzenden Mutter 60 (siehe Fig.1) lassen sich dann die beiden Enden 16 und 18 des Haltabandas 10,10a aufeinander zubewegen und das aufzunehmende Teil (nicht dargestellt) in der Schelle festspannen. Durch Lösen der Mutter 60 läßt sich diese Verbindung wieder lösen, wobei der Kopf 56 aus der Aussparung 54 ausrastbar ist. Auch der Zapfen 50a kann vergleichbar dem Zapfan 50b drehbar gelagert sein, so daß zueinander bewegbare Gelenkpunkte an den beiden Enden 16 und 18 des Haltebandes gegeben sind, die die Handhabbarkeit der Schelle, insbesondere beim Öffnen und Schließen derselben, mittels dem Verschlußteil 14 vereinfachen.

Die in Fig.1 dargestellten Profilgummistücke 62 sind im Querschnitt U-förmig ausgebildet und umgreifen jeweils das Halteband 10,10a vom Aufnahmeraum 12 her. Die einander zugekehrten Enden der beiden Profilgummistücke 62 können die beiden Zapfen 50a,b seitlich zumindest teilweise umgreifen und diese in ihrer Lage fixieren.

Mit der in Fig.1 verkleinert dargestellten Schelle lassen sich Nenndurchmesser von aufzunehmenden Teilen im Größenbereich zwischen 167 mm bis 229 mm aufnehmen.

Bei dem vorgestellten Ausführungsbeispiel der erfindungsgemäßen Schelle weist das Halteteil das Aufnahmeteil auf, in das das Halteband einsetzbar ist. Das Aufnahmeteil kann aber auch Teil des Haltebandes sein, in das das Halteteil dann einsetzbar ist. Ferner kann sowohl Halteteil als auch Halteband ein Aufnahmeteil aufweisen, in das dann das Halteband bzw. das Halteteil gegenseitig einsetzbar sind.

## Patentansprüche

1. Schelle mit einem biegsamen einstückigen Halteband (10;10a), an dem ein Verschlußteil (14) angeordnet ist, mit einem Halteteil (20), das zwei Ausnehmungen (28) für einen Eingriff des Haltebandes (10;10a) aufweist, und mit Haltemitteln (29;42) zum Festlegen des Haltebandes (10;10a) am Halteteil (20), dadurch gekennzeichnet, daß beide Ausnehmungen (28) nach einer gemeinsamen Seite des Halteteiles (20) ins Freie münden und jeweils eine Hinterschneidung (30) aufweisen und daß endseitig an der jeweiligen Ausnehmung (28) als Haltemittel eine Nase (29) vorgesehen ist.

2. Schelle nach Anspruch 1, dadurch gekennzeichnet, daß ein Teil der Haltemittel (42) Teil mindestens eines Verbindungsteiles (38) ist, das jeweils in das Halteteil (20) einsetzbar ist und mittels dem das Halteband (10;10a) mit dem Halteteil (20) fest verbindbar ist.

3. Schelle nach Anspruch 2, dadurch gekennzeichnet, daß das Verbindungsteil (38) eine Auflagefläche (40) für das von der Schelle aufzunehmende Teil aufweist.

4. Schelle nach Anspruch 2 oder 3, dadurch gekennzeichnet, daß das Halteteil (20) zwischen seinen beiden Ausnehmungen (28) ein Stützteil (22) mit einer Krümmung aufweist, die kleiner oder gleich der Krümmung des Haltebandes (10a bzw. 10) in dem Bereich zwischen diesen Ausnehmungen (28) ist.

5. Schelle nach Anspruch 4, dadurch gekennzeichnet, daß das Halteteil (20) zumindest teilweise breiter als das Halteband (10;10a) ist und daß das Stützteil (22) mit einem Fußteil (24) verbunden ist, mittels dessen die Schelle befestigbar ist.

6. Schelle nach einem der Ansprüche 1 bis 5, dadurch gekennzeichnet, daß das Verschlußteil (14) zwei Zapfen (50a,b) aufweist, die jeweils von den Enden (16,18) des Haltebandes (10;10a) umschlungen sind, von denen einer (50b) schwenkbar angeordnet ist, und ein längsververstellbares Eingreifteil (56,58,60) aufweist, das in eine Ausnehmung (52) des anderen Zapfens (50a) einsetzbar ist.

7. Schelle nach einem der Ansprüche 1 bis 6, dadurch gekennzeichnet, daß das Halteband (10;10a) mindestens ein aufsteckbares Profilgummistück (62) aufweist.

8. Schelle nach einem der Ansprüche 2 bis 7, dadurch gekennzeichnet, daß
- das Halteband (10;10a) aus Nirosta-Stahl,
- das Halteteil (20) aus einem Stahlblech und
- das Verbindungsteil (38) aus Polyäthylen
gebildet ist.

## Claims

1. Clamp with a flexible one-piece strap (10; 10a), on which a locking part (14) is located, with a retaining part (20), which comprises two recesses (28) for the engagement of the strap (10; 10a), and with retaining means (29; 42) for fixing the strap (10; 10a) on the retaining part (20), characterized in that towards one common side of the retaining part (20), both recesses (28) open into the atmosphere and comprise respectively one back taper (30), and that a lug (29) is provided at the end face on the respective recess (28) as retaining means.

2. Clamp according to Claim 1, characterized in that a part of the retaining means (42) is a part at least of one connecting part (38), which can be inserted respectively in the retaining part (20) and by means of which the strap (10; 10a) can be securely connected to the retaining part (20).

3. Clamp according to Claim 2, characterized in that the connecting part (38) comprises a contact surface (40) for the part to be received by the clamp.

4. Clamp according to Claim 2 or 3, characterized in that between its two recesses (28), the retaining part (20) comprises a support part (22) with a curvature, which is less than or equal to the curvature of the strap (10a or 10) in the region between these recesses (28).

5. Clamp according to Claim 4, characterized in that the retaining part (20) is at least partly wider than the strap (10; 10a) and that the support part (22) is connected to a foot part (24), by means of which the clamp can be fastened.

6. Clamp according to one of Claims 1 to 5, characterized in that the locking part (14) comprises two pins (50a, 50b), which are respectively surrounded by the ends (16, 18) of the strap (10; 10a), whereof one (50b) is arranged to tilt and comprises a longitudinally adjustable engagement part (56, 58, 60), which can be inserted in a recess (52) in the other pin (50a).

7. Clamp according to one of Claims 1 to 6, characterized in that the strap (10; 10a) comprises at least one attachable profiled rubber member (62).

8. Clamp according to one of Claims 2 to 7, characterized in that
- the strap (10; 10a) consists of stainless steel,
- the retaining part (20) consists of a steel sheet and
- the connecting part (38) is formed from polyethylene.

## Revendications

1. Collier de serrage composé d'un collier de support (10; 10a) muni d'une pièce de fermeture (14) et d'une pièce d'appui (22) avec pied de fixation (20) portant deux encoches (28) pour le passage du collier de support (10; 10a), équipé de pièces de retenue (29; 42) pour le maintien du collier de support (10; 10a) au pied de fixation (20), caractérisé par le fait que les deux encoches (28), s'ouvrant vers l'extérieur, sont placées du même côté du pied de fixation (20) et possèdent chacune une contre dépouille (30) laquelle porte un nez (29) à son extrémité.

2. Collier de serrage selon la revendication 1, caratérisé par le fait qu'une partie des pièces de retenue (42) fait partie d'une pièce de jonction (38) pouvant être montée sur le pied de fixation (20) servant à relier le collier de support (10; 10a) au pied de fixation (20).

3. Collier de serrage selon la revendication 2, caractérisé par une pièce de jonction (38) comportant une assise (40) pour la pièce à attacher à l'aide du collier.

4. Collier de serrage selon les revendications 2 ou 3, caractérisé par le fait que la pièce d'appui (22) possède, entre ses encoches (28), un rayon de courbure inférieur ou égal au rayon du collier de support (10; 10a).

5. Collier de serrage selon la revendication 4, caractérisé par le fait que la pièce d'appui (22) comporte des pattes de fixation (24) et que la largeur de la pièce d'appui (22) déborde la largeur du collier de support (10; 10a) sur au moins une partie de sa surface.

6. Collier de serrage selon les revendications 1 à 5, caractérisé par une fermeture (14) composée de deux tenons (50a, b), entourés des boucles des extrémités (16, 18) du collier de support (10; 10a), dont un (50b) est pivotant et porte la pièce de serrage (56, 58, 60) ajustable s'emboîtant dans la cuvette (52) du tenon opposé (50a).

7. Collier de serrage selon les revendications 1 à 6, caractérisé par le fait que le collier de support (10; 10a) comporte au moins une pièce en caoutchouc profilé (62).

8. Collier de serrage selon les revendications 2 à 7, caractérisé par le fait
- que le collier de support (10; 10a) est en acier inoxydable,
- que le pied de fixation (20) est en tôle d'acier, et
- que la pièce de jonction (38) est en polyéthylène.
